# EUROPÄISCHE PATENTANMELDUNG

(11) **EP 0 773 059 A2**
(43) Veröffentlichungstag der Anmeldung: **14.05.1997**
(21) Anmeldenummer: 96117046.1
(22) Anmeldetag: 24.10.1996
(51) Int. Cl.: B01J 3/00, B01J 3/04

(54) **Verfahren zum Autoklavieren von porösem, stückigem Gut**

(30) Priorität: 11.11.1995 DE 19542093
(71) Anmelder: SICOWA Verfahrenstechnik für Baustoffe GmbH & Co. KG, D-52072 Aachen (DE); Hebel Aktiengesellschaft, D-82275 Emmering (DE)
(72) Erfinder: Peifer, Hermann Josef, Dr., 52062 Aachen (DE); Weitzel, Johannes, 52072 Aachen (DE)
(74) Vertreter: Röhl, Wolf Horst, Dipl.-Phys., Dr.

(57) **Zusammenfassung**

Die Erfindung betrifft ein Verfahren zum Autoklavieren von porösem, stückigem Gut, insbesondere calciumhydrosilicatgebundene Formkörper, bei dem nach einer Aufheizphase eine kombinierte Härte- und Trocknungsphase und eine anschließende Drucksenkungsphase vorgesehen sind, wobei aus dem in der Härtephase befindlichen Autoklaven wasserdampfhaltiges Heizmedium geregelt abgeblasen wird, wobei am Ende der Trocknungsphase die Randzonen des stückigen Gutes durch Umspülen mittels Sattdampf isobar gekühlt werden, um die Rißbildungsgefahr zu vermeiden.

## Beschreibung

Die Erfindung betrifft ein Verfahren zum Autoklavieren von porösem, stückigem Gut nach dem Oberbegriff des Anspruchs 1.

Ein derartiges, insbesondere zum Autoklavieren von Porenbetonsteinen geeignetes Verfahren ist aus der EP 0 538 755 B1 bekannt. Hierbei sind nach einer Aufheizphase eine kombinierte Härte- und Trocknungsphase und eine anschließende Drucksenkphase vorgesehen, wobei zum Trocknen aus dem in der Härte- und Trocknungsphase befindlichen Autoklaven wasserdampfhaltiges Heizmedium geregelt abgeblasen und zumindest zum teilweisen Aufheizen eines weiteren aufzuheizenden Autoklaven wiederverwendet wird.

Bei der isobaren Trocknung von Porenbetonsteinen mit Heißdampf findet zunächst ein Übergang des Wassers von der flüssigen in die gasförmige Phase an der Steinoberfläche statt, während innerhalb des Steins das flüssige Wasser durch einen Kapillartransport an die Oberfläche gebracht wird. Der Stein ist dabei isotherm, seine Materialtemperatur entspricht der Siedetemperatur des Wasserdampfpartialdruckes der den Stein umgebenden Atmosphäre. Durch verzögerte Aufheizvorgänge kann die Temperatur des Steinkerns eventuell auch unterhalb der Siedetemperatur liegen.

Schließlich erfolgt die Trocknung an den Steinoberflächen so schnell, daß der Kapillartransport nicht ausreicht, die Steinoberflächen feucht zu halten. Die Randzonen des Steins trocknen aus. Die Materialtemperatur steigt in den Randzonen an und führt hier zu einer überhitzung gegenüber dem noch feuchten Kern des Porenbetonsteins. Bei fortschreitender Trocknung wächst die Randzone, die sich durch eine Feuchte unterhalb der Ausgleichsfeuchte und Temperaturen oberhalb des Siedepunktes auszeichnet.

Durch die Rückverdampfung in der sich anschließenden Drucksenkungsphase folgt die Kerntemperatur des Porenbetonsteins der Siedetemperatur und führt so zu einem Kühlen des Kerns bis auf 100°C bei Umgebungsdruck.

Die überhitzten Randzonen kühlen nicht so schnell aus, so daß während des Abdampfens die Temperaturdifferenz zwischen Rand und Kern steigt. Dies führt aufgrund der Temperaturdehnung zu einer Entlastung der aus der Trocknung durch Schwinden resultierenden Zugspannungen innerhalb des Randbereiches.

Durch die Rückverdampfung wächst die trockene Randzone, was zu einem Anstieg der Zugspannungen und somit zu einer Rißbildung während des Abdampfens führen kann.

Beim Ausfahren des Autoklavenbesatzes aus einer überhitzten Atmosphäre erfährt der Stein einen Temperaturschock. Nach der Trocknung und der Drucksenkung befindet sich der Stein mit einer Kerntemperatur von 100°C und Materialtemperaturen in den Randschichten von 130°C bis 180°C in einer überhitzten Atmospähre von 180°C bis 200°C. Beim Ausfahren wird der Stein innerhalb weniger Sekunden oder Minuten einer Umgebung mit etwa 20°C (Produktionshalle) ausgesetzt. Dies führt zu einem schnellen Abkühlen der Steinoberfläche und somit zu einem Temperaturschock mit einem Anstieg der Zugspannung in den Randzonen, wodurch die Gefahr einer Rißbildung entsteht. Die Zugspannungen, die durch das Schwinden innerhalb der Randzonen entstehen, werden durch Zugspannung aufgrund der Thermaldehnung (Kontraktion) der Ränder verstärkt. Die Gefahr der Rißbildung ist beim Ausziehen des autoklavierten Gutes am größten, da sich Zugspannungen durch Schwinden und Thermaldehnung in den Randzonen addieren. Die Vorgänge erfolgen sehr schnell, so daß Kriechen und Relaxation nur unwesentlich zu einem Spannungsabbau im Stein beitragen können.

Aufgabe der Erfindung ist es, ein Verfahren der eingangs geannten Art zu schaffen, bei dem eine Rißbildung des autoklavierten Gutes vermieden wird.

Diese Aufgabe wird entsprechend dem kennzeichnenden Teil des Anspruchs 1 gelöst.

Durch das Umspülen des autoklavierten Gutes mit Sattdampf im Anschluß an eine Trocknung kann die Überhitzung der Randzonen effektiv abgebaut werden, d.h. die Temperaturdifferenz zwischen den Randzonen und der Kerntemperatur im Inneren des autoklavierten, stückigen Gutes (mit einem entsprechend ausgebildeten Temperaturprofil) wird erheblich reduziert, so daß Spannungen, die aufgrund von lokalen Temperaturgradienten im Gut beim Ausziehen des Gutes aus dem Autoklaven auftreten, so stark herabgesetzt werden, daß sie von dem stückigen Gut ohne die Gefahr einer Rißbildung aufnehmbar sind.

Die so herabgesetzte Temperaturdifferenz zwischen Randzone und Kern bleibt auch während der Drucksenkungsphase erhalten, wobei die Kerntemperatur mit der Sattdampfkurve bis auf 100°C bei Umgebungsdruck absinkt. Zweckmäßigerweise wird das Kühlen durch Umspülen mit Sattdampf während der Drucksenkungsphase und gegebenenfalls bis zum Entfernen des stückigen Guts aus dem Autoklaven fortgesetzt, wodurch die Temperaturdifferenz zwischen Kern und Randzone weiter verringert wird. Durch das Senken der Oberflächentemperatur werden der Temperaturschock beim Öffnen des Autoklaven und somit die inneren Spannungen im Stein abgebaut. Dadurch kann die Rißbildung des autoklavierten Gutes vermieden werden.

Eine Rückbefeuchtung der Formkörper durch den Sattdampf kann nicht stattfinden, da die Temperatur der Randzone oberhalb der Siedetemperatur des Wassers liegt.

Der Sattdampf kann vorteilhaft aus einer separaten Dampfquelle von unten in den Autoklaven eingeführt werden, während dessen überdruckventil soweit geöffnet wird, daß sich kein Überdruck aufbaut bzw. der Druck vor der Drucksenkungsphase auch nicht absinkt. Der so zum Kühlen des stückigen Gutes den Autoklaven durchlaufende Sattdampf wird zweckmäßigerweise wenigstens teilweise zum Aufheizen eines anderen aufzuheizenden Autoklaven verwendet.

Der Sattdampf kann auch im Autoklaven selbst erzeugt werden, imdem durch dosiertes Eindüsen von flüssigem Wasser in den Autoklaven in diesem unter Abbau bzw. Nutzung der Überhitzung Sattdampf gebildet wird.

Der Sattdampf kann mittels Zwangskonvektion oder durch natürliche Konvektion zur kühlenden Einwirkung gebracht werden.

Ferner ist es zweckmäßig, im Anschluß an die Drucksenkungsphase, wenn der Umgebungsdruck erreicht ist, durch Kühlen der Dampfatmosphäre im Autoklaven einen Unterdruck, vorzugsweise im Bereich von 0,1 bis 0,5 bar absolut, zu erzeugen. Dies kann beispielsweise durch Wassereinspritzung oder über Kühlflächen bewirkt werden, während infolge der Kühlung anfallendes Kondensat abgeführt wird.

Die Kühlflächen können beispielsweise durch im Autoklaven befindliche Kühlschlangen gebildet werden, die seitlich und unterhalb des Gutes angeordnet sind, während das Kondensat über eigene Auffangtassen oder ein allgemeines Entwässerungssystem abgeführt wird.

Wird über Wassereinspritzung gekühlt, kann die gleiche Wassereinspritzvorrichtung wie zum Erzeugen von Sattdampf verwendet werden.

Ferner läßt sich zum Kühlen ein Einspritzkondensator oder ein Oberflächenkondensator zwischen einer Abdampfleitung des Autoklaven und einer Vakuumpumpe verwenden, welche als Strahlpumpe oder als Wasserringpumpe ausgeführt sein kann.

Eine derartige Druckabsenkung durch Kühlen bewirkt nicht nur ein zusätzliches Trocknen des stückigen Gutes, sondern senkt ferner die Temperatur sowohl im Inneren als auch in den Randzonen weiter ab, wodurch die Rißbildungsgefahr weiter vermindert wird.

Diese Druckabsenkung kann relativ schnell erfolgen, da die Dampfdiffusion aus den Poren des Gutes kaum behindert wird und die zur Verdampfung notwendige Wärme nicht erst übertragen werden muß, sondern im Gut bereits gespeichert ist. Der Vorteil dieser Nachevakuierung ist es, daß das im feuchten Gut befindliche Wärmepotential nicht bloß bis 100°C, sondern bis zum Siedepunkt des tiefsten Druckes genutzt wird. Eine Kühlstrecke für das aus dem Autoklaven entnommene Gut kann entfallen und das entnommene Gut ist sogleich gut handhabbar.

Da vor dem Öffnen des Autoklaven wieder Luft eingelassen werden muß, um diesen auf Umgebungsdruck zu bringen, mischt sich die Luft mit der Wasserdampfatmosphäre innerhalb des Autoklaven, kühlt diese und damit auch die Randzonen des stückigen Gutes langsam weiter ab, wodurch die Spannungen beim Ausziehen des Gutes zusätzlich weiter herabgesetzt werden.

In dem beigefügten Temperatur-Zeit-Diagramm ist schematisch ein Autoklaviervorgang dargestellt, wobei die der Sattdampftemperatur folgende Kerntemperatur ausgezogen und die Randzonentemperatur gestrichelt dargestellt ist.

Beim Hochfahren des Autoklaven eilt die Kerntemperatur der Randzonentemperatur nach, bis beide schließlich in der Halte- und Trocknungsphase zunächst gleich sind. Beim Trocknen durch Kapillartransport bleiben beide Temperaturen zunächst gleich, wonach der Kapillartransport schließlich nicht mehr ausreicht, die Randzonen feucht zu halten. Sie trocknen aus. Die Materialtemperatur steigt in den Randzonen an und führt hier zu einer Überhitzung gegenüber dem noch feuchten, auf Sattdampftemperatur befindlichen Kern.

Am Ende das Trocknungsvorgangs setzt dann das isobare Spülen mit Sattdampf ein, wodurch die Temperaturdifferenz zwischen Kern und Randzone entsprechend herabgesetzt wird. Dieses Spülen kann während der nachfolgenden Drucksenkungsphase weiter aufrechterhalten bleiben, damit am Ende der Drucksenkungsphase, wenn Umgebungsdruck erreicht ist, die Temperaturdifferenz zwischen Kern (100°C) und Randzone so gering ist, daß die im Verlauf des Öffnens des Autoklaven aufgrund des Temperaturschocks auftretenden Spannungen nicht zu Rissen in den Formkörpern führen können.

Öffnet man den Autoklaven bei Erreichen dieses Endes der Drucksenkungsphase nicht, sondern kühlt die Wasserdampfatmosphäre des Autoklaven, wird der Druck weiter abgesenkt, weiteres Wasser verdampft und die Kerntemperatur folgt der Dampfdruckkurve beispielsweise bis 60°C bei etwa 0,2 bar absolut, wodurch auch die Randzonentemperatur weiter absinkt. Ein anschließender, geregelter Lufteinlaß, bei dem sich Umgebungsluft mit der Wasserdampfatmosphäre mischt und letztere weiter kühlt, führt zu einem Abkühlen der Randzonen und damit einem weiteren Herabsetzen der Temperaturdifferenz.

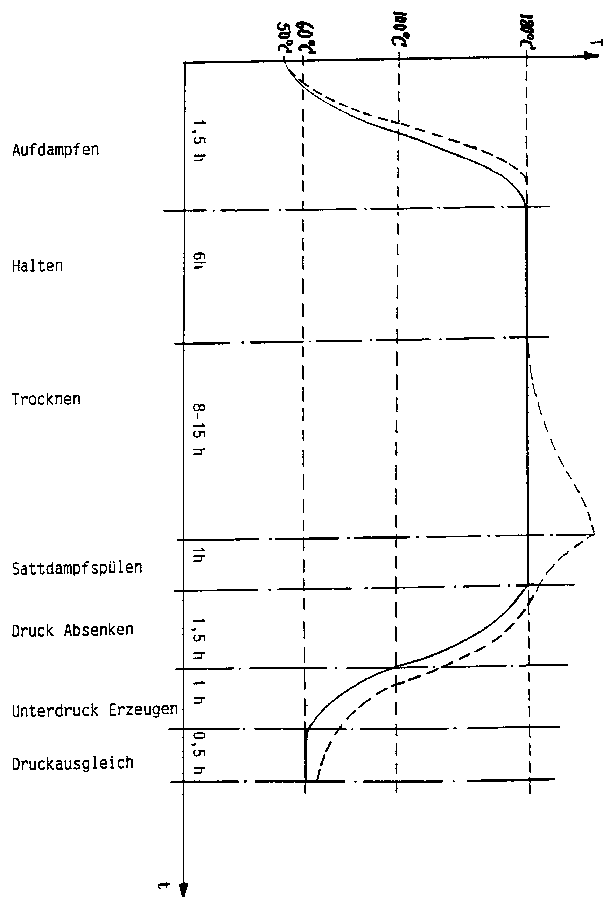

## Patentansprüche

1. Verfahren zum Autoklavieren von porösem, stückigem Gut, insbesondere von calciumhydrosilicatgebundenen Formkörpern, bei dem nach einer Aufheizphase eine kombinierte Härte- und Trocknungsphase und eine anschließende Drucksenkungsphase vorgesehen sind, wobei aus dem in der Härtephase befindlichen Autoklaven wasserdampfhaltiges Heizmedium geregelt abgeblasen und gegebenenfalls zumindest zum teilweisen Aufheizen eines weiteren aufzuheizenden Autoklaven wiederverwendet wird, dadurch **gekennzeichnet,** daß am Ende der Trocknungsphase die Randzonen des stückigen Gutes durch Umspülen mittels Sattdampf isobar gekühlt werden.

2. Verfahren nach Anspruch 1, dadurch gekennzeichnet, daß die Kühlung mittels Sattdampf in die Drucksenkungsphase und gegebenenfalls bis zum Entfernen des stückigen Guts aus dem Autoklaven fortgesetzt wird.

3. Verfahren nach Anspruch 1 oder 2, dadurch gekennzeichnet, daß der zum Kühlen verwendete Sattdampf aus einer separaten Dampfquelle in den Autoklaven geleitet wird.

4. Verfahren nach Anspruch 1 oder 2, dadurch gekennzeichnet, daß der zum Kühlen verwendete Sattdampf durch Eindüsen von flüssigem Wasser in den Autoklaven in diesem unter Abbau und Nutzung von überhitzung gebildet wird.

5. Verfahren nach einem der Ansprüche 1 bis 4, dadurch gekennzeichnet, daß man den zum Kühlen verwendeten Sattdampf durch Zwangskonvektion das Gut umspülen läßt.

6. Verfahren nach einem der Ansprüche 1 bis 4, dadurch gekennzeichnet, daß der zum Kühlen verwendete Sattdampf durch Naturkonvektion um das überhitzte Gut geführt wird, wobei der Sattdampf in einer Position innerhalb des Autoklaven eingeführt bzw. erzeugt wird, die sich oberhalb der Unterkante des stückigen Gutes im Autoklaven, vorzugsweise oberhalb der Oberkante des stückigen Gutes im Autoklaven befindet.

7. Verfahren nach einem der Ansprüche 1 bis 6, dadurch gekennzeichnet, daß der zum Kühlen verwendete Sattdampf anschließend zumindest zum teilweisen Aufheizen eines weiteren aufzuheizenden Autoklaven wiederverwendet wird.

8. Verfahren nach einem der Ansprüche 1 bis 6, dadurch gekennzeichnet, daß im Anschluß an die Drucksenkungsphase durch Kühlen der Dampfatmosphäre des Autoklaven ein Unterdruck, vorzugsweise im Bereich von 0,1 bis 0,5 bar, erzeugt wird.

9. Verfahren nach Anspruch 8, dadurch gekennzeichnet, daß das Kühlen durch Wassereinspritzung vorgenommen wird.

10. Verfahren nach Anspruch 8, dadurch gekennzeichnet, daß das Kühlen über Kühlflächen vorgenommen wird.

11. Verfahren nach einem der Ansprüche 8 bis 10, dadurch gekennzeichnet, daß infolge der Kühlung anfallendes Kondensat abgeführt wird.
